# EUROPÄISCHE PATENTANMELDUNG

(11) **EP 3 418 118 A1**
(43) Veröffentlichungstag der Anmeldung: **26.12.2018**
(21) Anmeldenummer: 17176818.7
(22) Anmeldetag: 20.06.2017
(51) Int. Cl.: B60P 3/14, B60P 1/54

(54) **WERKSTATTTRAILER FÜR AUSZIEHBAREN TELESKOPFÖRDERER**

(71) Anmelder: Siemens Aktiengesellschaft, 80333 München (DE)
(72) Erfinder: BECHER, Jörn, 55127 Mainz (DE); HANNA, Christian, 97056 Erlangen (DE); ELBAEK, Peter, 65719 Hofheim (DE); CHRISTEN, Hans-Ueli, 5079 Zeihen (CH)
(74) Vertreter: Maier, Daniel Oliver

(57) **Zusammenfassung**

Die Erfindung offenbart einen Werkstatttrailer (2), der ausgestaltet zur Wartung eines ausziehbaren Teleskopförderers(4) und ein Verfahren zur erfindungsgemäßen Wartung mit diesem Werkstatttrailer (2). Der Werkstatttrailer (2) umfasst eine Endseite (6), die zur Aufnahme des Teleskopförderers (4) in ausgezogenem Zustand ausgestaltet ist, eine an den Werkstatttrailer (2) gekoppelte Stützvorrichtung (8), umfassend eine Trägervorrichtung (10) und mindestens eine an die Trägervorrichtung (10) koppelbare Hebevorrichtung (12), wobei die Stützvorrichtung (8) ausgestaltet ist, zumindest einen Teil des Teleskopförderers (4) abzustützen und eine Vielzahl an Werkzeugen (20), welche mit dem Werkstatttrailer (2) gekoppelt und zur Wartung des Teleskopförderers (4) ausgestaltet sind. Die Trägervorrichtung (10) umfasst einen entlang einer Breite des Werkstatttrailers (2) angeordneten Querträger (14), wobei die Hebevorrichtung (12) an den Querträger (14) koppelbar ist.

Zur Wartung wird der Teleskopförderer (4) in den Werkstatttrailer (2) austeleskopiert und von ihm aufgenommen. Der Teleskopförderer (4) wird von Hebevorrichtungen (12) abgestützt, die an die Querträger beweglich koppelbar sind.

## Beschreibung

Die vorliegende Erfindung betrifft das technische Gebiet der Wartung von Fördertechnikvorrichtungen für Güter an Endstellen, insbesondere von Be- und Entladesystemen für Güter, beispielsweise Logistikgüter, Pakete, Postsendungen und Gepäckstücke.

Handel, Industrie, Logistikunternehmen und Flughäfen verwenden Teleskope, beispielsweise ausziehbare Teleskopförderer, zur Be- und Entladung von Transportvorrichtungen wie LKWs, Trailern, Wechselbrücken, Containern, Flughafengepäckanhängern, Unit Load Devices (ULD) u.ä. mit Gütern wie Waren, Sendungen, Postsendungen und Gepäckstücken. Teleskopförderer finden auch in anderen Gebieten zur Anwendung. Die Teleskopförderer haben je nach Ausführung und regelmäßiger Belastung eine begrenzte Lebenserwartung. Am Ende dieser Lebenserwartung bestehen für den Betreiber die beiden Möglichkeiten "Komplettaustausch gegen neue Teleskope" oder "Teleskopsanierung". US 8429801 offenbart einen zur Wartung eines Teleskopförderers ausgestalteten Trailer.

In der US 8429801 ist die Vorrichtung zur Aufhängung des Teleskopförderers nicht optimal gelöst. Auch ist der Trailer für das Warten von Teleskopförderern des nordamerikanischen Marktes ausgestaltet. In Europa und anderen Teilen der Welt werden andere Teleskopförderer verwendet.

Der vorliegenden Erfindung liegt daher die Aufgabe zugrunde, einen verbesserte Vorrichtung und ein verbessertes Verfahren zur Wartung von Teleskopförderern bereitzustellen. Diese Aufgabe wird durch die in den unabhängigen Ansprüchen beschriebenen Lösungen gelöst.

Die erfindungsgemäße Lösung sieht einen Werkstatttrailer ausgestaltet zur Wartung eines ausziehbaren Teleskopförderers vor, umfassend
- eine Endseite, die zur Aufnahme des Teleskopförderers in ausgezogenem Zustand ausgestaltet ist;
- eine an den Werkstatttrailer gekoppelte Stützvorrichtung, umfassend eine Trägervorrichtung und mindestens eine an die Trägervorrichtung koppelbare Hebevorrichtung, wobei die Stützvorrichtung ausgestaltet ist, zumindest einen Teil des Teleskopförderers abzustützen; und
- eine Vielzahl an Werkzeugen, welche mit dem Werkstatttrailer gekoppelt und zur Wartung des Teleskopförderers ausgestaltet sind. Die Trägervorrichtung umfasst einen entlang einer Breite des Werkstatttrailers angeordneten Querträger, wobei die Hebevorrichtung an den Querträger koppelbar ist.

Die Begrifflichkeit koppelbar umfasst sowohl ankoppelbar, als auch abkoppelbar. Eine Verbindung, die koppelbar ist, kann relativ einfach, mit wenig Aufwand eingerichtet und gelöst werden. Unter längs bzw. einer Längsrichtung soll im Folgenden eine Richtung im Wesentlichen entlang einer Länge des Werkstatttrailers verstanden werden. Unter quer bzw. einer Querrichtung soll eine Richtung entlang einer Breite des Werkstatttrailers verstanden werden, die im Wesentlichen orthogonal zur Längsrichtung ist. Unter ausziehbar soll insbesondere eine Längenverstellbarkeit des Teleskopförderers verstanden werden, wobei der Teleskopförderer hierzu eine Speichervorrichtung erfordert zum temporären Verkürzen des Förderbandgurtes, beispielsweise durch Umlenkrollen und/oder eine Aufrollvorrichtung, die beide nicht auf der Transportebene des Teleskopförderers angeordnet sein dürfen. Der Werkstatttrailer 2 kann für das warten, reparieren und sanieren verwendet werden - unabhängig davon, von welcher der Nachfolgenden Begrifflichkeiten im Folgenden die Rede ist.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Um ein möglichst flexibles Positionieren der Hebevorrichtung entlang der Länge des Werkstatttrailers trotz fixer Positionierung der Querträger zu ermöglichen, kann die Trägervorrichtung zwei oder mehr Querträger umfasst, die versetzt entlang einer Länge des Werkstatttrailers angeordnet sind. Die Hebevorrichtung kann an jeden der Querträger an- und abgekoppelt werden.

Um eine flexible Querpositionierung der Hebevorrichtung in Querrichtung zu ermöglichen, kann die Hebevorrichtung so an die Querträger koppelbar und einstellbar sein, dass sie entlang einer Länge der Querträger beweglich und/oder arretierbar ist.

Um unkompliziert und auf adäquater Arbeitshöhe einen neuen Förderbandgurt zum Einziehen bereitzustellen und/oder einen gebrauchten Förderbandgurt abzuziehen, kann der Werkstatttrailer zudem eine Förderbandgurt-Gurttrommel umfassen, die an die Trägervorrichtung koppelbar sein kann. Das Koppeln an die Trägervorrichtung ermöglicht eine Positionierung, die einen Arbeiter räumlich so wenig wie möglich bei der Wartung behindert, beispielsweise oberhalb des Teleskopförderers.

Gemäß einer bevorzugten Ausführungsform können die Werkzeuge ein Gurtschweißgerät umfassen, welches ausgestaltet sein kann, Förderbandgurtenden eines ganz oder teilweise durchtrennten Förderbandgurtes des ausziehbaren Teleskopförderers thermisch zu verbinden. Hierzu kann das Gurtschweißgerät zwei Platten umfassen, von denen mindestens eine als Heizplatte ausgestaltet sein kann. Damit ein Gurtschweißgerät zur Anwendung kommen kann, sollte der Förderbandgurt gummiartig ausgestaltet sein.

Um die Wartung des Teleskopförderers an einer bestimmten Stelle unterhalb seines Förderbandgurtes zu ermöglichen, kann das Gurtschweißgerät zudem eine Schneidevorrichtung umfassen, welche ausgestaltet ist, den Förderbandgurt zu durchtrennen. So kann ein flexibles, aktives Auftrennen des Förderbandgurtes auf besonders einfache Weise erfolgen.

Gemäß einer weiteren Ausführungsform kann der Werkstatttrailer zudem einen Generator und/oder eine Abtrennvorrichtung, die als sicherheitsrelevanter Zugangsschutz ausgestaltet ist, um die Endseite des Werkstatttrailers gelegt zu werden, umfassen.

Für eine besonders hohe Flexibilität für die Verwendung von Werkzeugen und Vorrichtungen bei der Wartung , können einige oder alle Werkzeuge und/oder alle weiteren Vorrichtungen zur Wartung des ausziehbaren Teleskopförderers vom Werkstatttrailer entkoppelbar ausgestaltet sein.

Hinsichtlich eines Verfahrens wird die vorstehend genannte Aufgabe gelöst durch ein Verfahren zur Wartung eines ausziehbaren Teleskopförderers an einem Tor, umfassend die Verfahrensschritte:
a) Positionieren einer geöffneten Endseite eines Werkstatttrailers an das Tor angrenzend, wobei die geöffnete Endseite zur Aufnahme des Teleskopförderers ausgestaltet ist;
b) Ausziehen des Teleskopförderers entlang einer Länge des Werkstatttrailers über die geöffnete Endseite in den Werkstatttrailer hinein;
c) Abstützen von zumindest einem Teil des ausgezogenen Teleskopförderers mit Hilfe einer an den Werkstatttrailer gekoppelten Stützvorrichtung, umfassend eine Trägervorrichtung und mindestens eine an die Trägervorrichtung koppelbare Hebevorrichtung, so dass der Teleskopförderer auf einer zweckmäßigen Arbeitshöhe für die Wartung positioniert ist; und
d) Wartung des Teleskopförderers unter Verwendung einer Vielzahl an Werkzeugen, welche mit dem Werkstatttrailer gekoppelt und zur Wartung des Teleskopförderers ausgestaltet sind.

Die Trägervorrichtung umfasst einen entlang einer Breite des Werkstatttrailers angeordneten Querträger, an die mindestens eine Hebevorrichtung beweglich gekoppelt wird.

Gemäß einer Ausführungsform kann die mindestens eine Hebevorrichtung entlang dem Querträger bewegt und/oder arretiert werden. So wird auf einfache Weise eine Positionierung der Hebevorrichtung in Querrichtung ermöglicht, um einen seitlichen Versatz des Teleskopförderers zu kompensieren.

Um auch in Längsrichtung eine flexible Positionierung der Hebevorrichtung zu erlauben, kann die Trägervorrichtung zwei oder mehr Querträger umfassen, die versetzt entlang einer Länge des Werkstatttrailers angeordnet sind, wobei die Hebevorrichtung wahlfrei an einen der zwei oder mehr Querträger befestigt werden kann.

Um ein Warten des Teleskopförderers unter Verwendung von nur wenig Austauschmaterial zu ermöglichen, indem eine Reparatur des Förderbandgurtes erfolgt, können Förderbandgurtenden eines ganz oder zumindest teilweise durchtrennten Förderbandgurtes des Teleskopförderers mit einem von dem Werkstatttrailer umfassten Gurtschweißgerät thermisch verbunden werden.

Um alle unterhalb des Förderbandgurtes liegenden Komponenten zur Wartung ohne Ausbau des Förderbandgurtes erreichen zu können, kann der Förderbandgurt ganz oder vollständig von dem Gurtschweißgerät durchtrennt werden.

Gemäß einer bevorzugten Ausführungsform kann der Werkstatttrailer an seiner geöffneten Endseite gegen unerwünschten Zugang abgeschirmt werden. Damit kann gleichzeitig eine Isolation und Abschirmung gegen die Umwelt erzielt werden.

Um noch mehr Flexibilität und freie Beweglichkeit im Werkstatttrailer zu erlauben, und dennoch Zugriff auf die Wartungsinfrastruktur des Werkstatttrailers erlauben, kann ein Entkoppeln einiger oder aller Werkzeuge und/oder aller weiteren Vorrichtungen vom Werkstatttrailer und es kann Wartung des Teleskopförderers mit diesen entkoppelten Werkzeugen und/oder Vorrichtungen erfolgen.

Ausführungsformen der Erfindung werden nachfolgend anhand der Figuren beispielsweise näher erläutert. Dabei zeigen:
- Figuren 1-2: schematische Ausführungsformen eines Werkstatttrailer von oben; und
- Figuren 3-4: schematisch weitere Ausführungsformen eines Werkstatttrailers von der Seite.

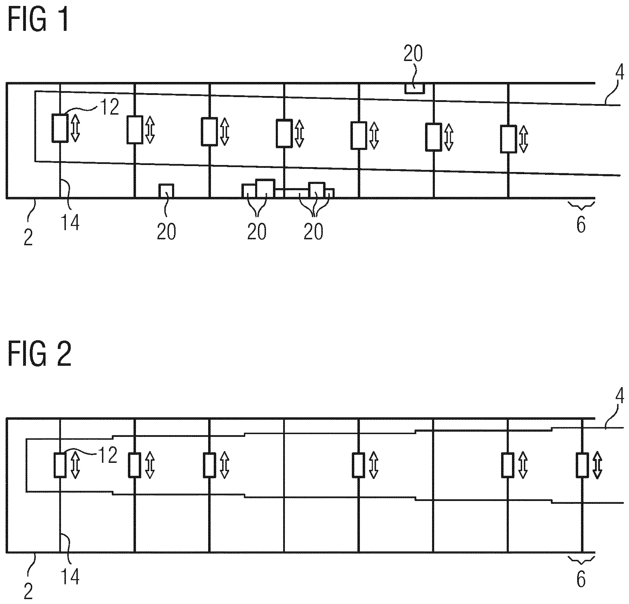

Figur 1 zeigt schematisch von oben einen Werkstatttrailer 2 zur Wartung eines ausziehbaren, also längenverstellbaren, Teleskopförderers 4 gemäß einer Ausführungsform der Erfindung. Der Werkstatttrailer 2 ist mit sämtlichen Werkzeugen 20 ausgestattet, die zur Sanierung und Wartung des Teleskopförderers 4 typischerweise benötigt bzw. herangezogen werden. Der Werkstatttrailer 2 wird an das Tor des zu sanierenden Teleskopförderers 4 positioniert, der Teleskopförderer 4 in den Werkstattrailer austeleskopiert und dort repariert bzw. saniert. Der Teleskopförderer 4 kann somit in der Regel eingebaut bleiben, zudem können die Teleskopförderer 4 eines Werkes oder einer Sortierstelle ohne größeren logistischen Aufwand hintereinander gewartet bzw. repariert werden, da der Werkstatttrailer 2 unkompliziert von einem Tor zum nächsten repositionierbar ist. Durch die sequentielle Wartung der Teleskopförderer 4 erfolgen nur geringe Produktionsbeeinträchtigungen bei großen Anlagen. Der Werkstatttrailer 2 kann als Wechselbrücke oder Sattelauflieger ausgestaltet sein, oder aber auch Räder umfassen, das Positionieren kann aktiv durch den Werkstatttrailer 2 selbst oder auch passiv erfolgen. Eine Ausgestaltung des Werkstatttrailers 2 kann auch ein gesamtes Fahrgestell eines Lastwagens o.ä. umfassen.

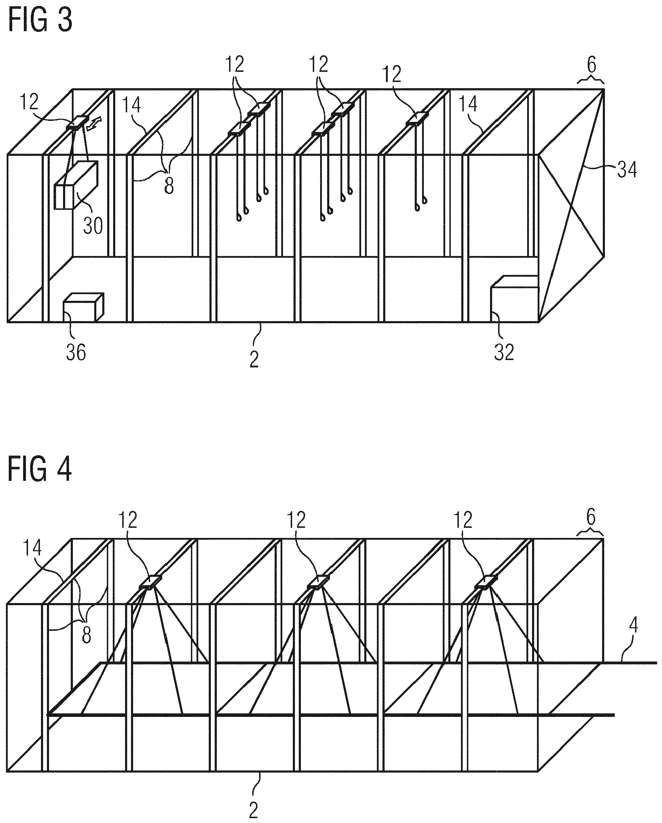

Der Werkstatttrailer 2 umfasst eine an ihn gekoppelte Stützvorrichtung 8, welche eine Trägervorrichtung 10 und mindestens eine an die Trägervorrichtung 10 koppelbare Hebevorrichtung 12 umfasst. Die Stützvorrichtung 8 ist ausgestaltet, zumindest einen Teil des Teleskopförderers 4 abzustützen. Zweckmäßigerweise wird jedes Segment eines Teleskopförderers 4 von einer Hebevorrichtung 12 gehalten, so dass die Anzahl gehaltener Segmente die Anzahl mindestens benötigter Hebevorrichtungen 12 bestimmt. Die Hebevorrichtungen 12 sind als zweidimensionale Portalkrane ausgestaltet. Figur 4 zeigt einen Teleskopförderer 4, dessen Segmente jeweils einzeln von einer an die Querträger 14 gekoppelten Hebevorrichtung 12 gehalten werden.

Das Austeleskopieren erfolgt, indem von einer öffenbaren und schließbaren Endseite 6 ausgehend der zu wartende Teleskopförderer 4 in das Innere des Werkstatttrailers 2 eingeführt wird. Der Werkstatttrailer 2 bzw. seine öffen- und schließbare Endseite 6 sind somit zur Aufnahme des Teleskopförderers 4 ausgestaltet. Um den Teleskopförderer 4 warten zu können, wird dieser an einer Hebevorrichtung 12 befestigt und so auf zweckmäßiger, also ergonomisch optimaler Arbeitshöhe positioniert. Die Hebevorrichtung 12 ist eine in ihrer Abhänghöhe höhenverstellbare Vorrichtung und somit als kleiner Kran ausgestaltet, umfassend eine Hängevorrichtung, beispielsweise eine Kette und/oder einen Haken, die um den Teleskopförderer 4 geschlungen oder anderweitig an ihm befestigt werden kann. Die Hebevorrichtung 12 ist nicht nur zum Tragen des Teleskopförderers 4, sondern auch zum Tragen weiterer Werkzeuge 20 und Vorrichtungen ausgestaltet, die zum Reparieren des Teleskopförderers 4 herangezogen werden. Die Werkzeuge 20 sind so oder anderweitig an den Werkstatttrailer 2 gekoppelt und können in unmittelbarer Nähe zu ihrem Einsatzort positioniert werden. Eine gewisse örtliche Flexibilität wird durch ein entkoppeln und wieder ankoppeln an unterschiedlichen Positionen ermöglicht.

Die Hebevorrichtung 12 wird an eine Trägervorrichtung 10 gekoppelt. Die Trägervorrichtung 10 wird von einer Stützvorrichtung 8 umfasst, von dieser getragen und umfasst Querträger 14, die quer zur Länge des Werkstatttrailers 2 angeordnet sind. Die Stützvorrichtung 8 ist hier nicht explizit dargestellt. Sie kann als Teil der Wände des Werkstatttrailers 2 ausgebildet sein, oder als separate Stützkonstruktion ausgestaltet sein, beispielsweise wie in Figur 3 gezeigt als aufrecht stehend positionierte Balken, auf denen Querträger 14 aufliegen.

Die Hebevorrichtung 12 umfasst einen Motor für die Höhenverstellbarkeit und ist entlang dem Querträger 14 beweglich und/ oder arretierbar einstellbar. So ist es nicht erforderlich, dass der Teleskopförderer 4 exakt mittig in den Werkstatttrailer 2 eingeführt wird. Auch bei leicht schräger Positionierung des Teleskopförderers 4 wie in Figur 1 gezeigt, können die Hebevorrichtungen 12, an denen der Teleskopförderer 4 aufgehängt ist, jeweils mittig oberhalb des Teleskopförderers 4 positioniert werden. Die Hebevorrichtungen 12 umfassen Umlenkrollen, damit die Verschiebung unter Belastung durchführbar ist. So kann ein seitlicher Versatz des schräg eingeführten Teleskopförderers 4 realisiert werden und es wirkt kein seitliches Druck- und/ oder Drehmoment auf den Teleskopförderer 4. Wenn alle Hebevorrichtungen 4 beweglich eingestellt werden, kann der an die Hebevorrichtungen 4 gekoppelte Teleskopförderer 4 auch seitlich verschoben werden, so dass er einfach von rechts und links erreichbar ist. In diesem Falle muss jedoch werksmäßig eine seitliche Verschiebbarkeit gegeben sein. Um ein versehentliches seitliches Verschieben der Hebevorrichtungen 4 zu verhindern, können die Hebevorrichtungen 12 arretiert werden.

Mehrere Querträger 14 sind versetzt entlang der Länge des Werkstatttrailers 2 angeordnet. Die Variabilität des Aufhängungspunktes einer Hebevorrichtung 12 in der Längsposition erfolgt durch die Auswahl des entsprechenden Querträgers 14. Wie in Figur 2 gemäß einer weiteren Ausführungsform gezeigt wird vorzugsweise je ein Segment des Teleskopförderers 4 von der Länge her ungefähr mittig bezüglich der Länge des entsprechenden Segmentes an mindestens einer Hebevorrichtung 12 aufgehängt. Jedes Segment wird also individuell aufgehängt. Um ungefähr mittige Positionierungen zu erzielen, werden die Hebevorrichtungen 12 bei Bedarf von einem Querträger 14 abgekoppelt und an einen anderen Querträger abgekoppelt. Nicht an jedem Querträger 14 befindet sich eine Hebevorrichtung 12, es stehen mehr Querträger 14 als Hebevorrichtungen 12 zur Verfügung. Die Hebevorrichtungen 12 werden wahlfrei an einen der Querträger 14 befestigt.

Figur 3 zeigt gemäß noch einer weiteren Ausführungsform der Erfindung eine Ausführungsform des Werkstatttrailers 2 in perspektivischer seitlicher Ansicht. Der Werkstatttrailer 2 ist zudem mit einer Förderbandgurt-Gurttrommel 30 ausgestattet, die über die Hebevorrichtung 12 an einen Querträger 14 der Trägervorrichtung 10 gekoppelt ist. Die Förderbandgurt-Gurttrommel 30 umfasst ein neues Förderband zum Einziehen in den Teleskopförderer 4. Dadurch, dass die Förderbandgurt-Gurttrommel 30 über die Hebevorrichtung 12 an der Trägervorrichtung 10 an- und abkoppelbar ausgestaltet ist, besteht eine Tauschmöglichkeit der Förderbandgurt-Gurttrommel 30 gegen eine andere Förderbandgurt-Gurttrommel 30 mit anderem Material. Durch Auswahl des Förderbandes hinsichtlich Material, Breite und Länge und somit Abstimmung auf den zu wartenden Teleskopförderer 4 ist der Werkstatttrailer 2 einfach auf den zu wartenden Teleskopförderer 4 einstellbar. Die Förderbandgurt-Gurttrommel 30 ist vorzugsweise an der der Endseite 6 gegenüberliegenden Seite angeordnet, um beim Einbringen des Teleskopförderers nicht im Weg zu sein.

Zusätzlich ist der Werkstatttrailer 2 mit einem Gurtschweißgerät 36 ausgestattet, mit dem zwei Förderbandgurtenden thermisch miteinander verbunden werden können, wobei ganz oder teilweise getrennte Förderbandgurtenden thermisch miteinander verbunden werden können, typischerweise besteht der Förderbandgurt aus einem gummiartigen Material und ist somit thermisch verbindbar. Das Gurtschweißgerät 36 umfasst zwei Platten, von denen mindestens eine als Heizplatte ausgestaltet ist. Das Gurtschweißgerät 36 kann zudem eine Schneidevorrichtung, beispielsweise eine Zahnschneidevorrichtung für gezacktes Trennen, umfassen, die ausgestaltet ist, den Förderbandgurt ganz oder teilweise zu durchtrennen. Ein aktives Auftrennen des Förderbandgurtes an einer bestimmten Stelle ermöglicht das Reparieren der Komponenten des Teleskopförderers an ebenjener Stelle unterhalb des Förderbandgurtes. So ist eine besonders ergonomische Handhabung des Gurtschweißgeräts 36 und thermisches Verbinden der Förderbandgurte möglich. Das Gurtschweißgerät 36 ist an den Werkstatttrailer 2, beispielsweise an die Wand, die Trägervorrichtung 10 oder die Hebevorrichtung 12, ankoppelbar und von diesem abkoppelbar und kann so mit maximaler Flexibilität zum Einsatz kommen und im Werkstatttrailer 2 frei bewegt werden. Ein besonders ergonomisches Handling des Gurtschweißgeräts 36 wird durch Befestigung an einer Hebevorrichtung 12 und deren dreidimensionale Beweglichkeit durch Verfahrbarkeit und Umkoppelbarkeit ermöglicht. Durch die Entkoppelbarkeit ist das Gurtschweißgerät 36 aber dennoch frei im Werkstatttrailer 2 bewegbar. Bei Nichtverwendung kann es durch Wiederankoppeln verstaut werden.

Gemäß einer weiteren Ausführungsform umfasst der Werkstatttrailer 2 an seiner geöffneten Endseite 6 eine Abtrennvorrichtung 34. Die Abtrennvorrichtung 34 kann in der Art eines aufblasbaren Kissens als aufblasbare Isolierung eine Abschirmung gegen die Umwelt (Hitze im Sommer, Kälte im Winter) darstellen und/ oder zugleich als sicherheitsrelevanter Zugangsschutz ausgestaltet sein und so gegen unerwünschten Zutritt abschirmen. Eine andere Möglichkeit zur Abschirmung bzw. zum Zugangsschutz ist eine in die Türen der Endseite 6 integrierte Ausgestaltung der Abtrennvorrichtung 34. Die Abtrennvorrichtung 34 ist ausgestaltet, vollständig um die Endseite 6 des Werkstatttrailers 2 gelegt zu werden und zudem noch die Öffnung des Tores zu umschließen. Die aufblasbare Isolierung dichtet den Zwischenraum zwischen Werkstatttrailer 2 und Tor ab. Hierdurch wird einerseits ein Vorteil bei besonders geringen oder hohen Umgebungstemperaturen erzielt und zumindest bei robuster Ausführung zugleich ein Zugangsschutz realisiert.

Der Werkstatttrailer 2 umfasst einen Generator 32 und ist so unabhängig von externer Stromversorgung, kann jedoch auch an diese anschließbar sein. Damit der Generator 32 einfach betreibbar ist, wird er in einem Fach fest untergebracht, beispielsweise angeordnet über dem Kupplungszapfen, und muss so nicht mehr zwecks Betrieb, Aufbewahrung und Transport verändert werden.

Gemäß einer weiteren Ausführungsform ist der Werkstatttrailer 2 mit Vorrichtungen zur Belüftung, Klimatisierung, Heizung ausgerichtet, um akzeptable Arbeitsplatzstandards zu erzielen.

Gemäß einer weiteren Ausführungsform sind einige oder alle Werkzeuge 20 und/oder alle weiteren Vorrichtungen zur Wartung des ausziehbaren Teleskopförderers 4 vom Werkstatttrailer 2 entkoppelbar ausgestaltet sind.

### Bezugszeichenliste

- 2: Werkstatttrailer
- 4: Teleskopförderer
- 6: Endseite
- 8: Stützvorrichtung
- 10: Trägervorrichtung
- 12: Hebevorrichtung
- 14: Querträger
- 20: Werkzeuge
- 30: Förderbandgurt-Gurttrommel
- 32: Generator
- 34: Abtrennvorrichtung
- 36: Gurtschweißgerät

## Patentansprüche

1. Werkstatttrailer (2) ausgestaltet zur Wartung eines ausziehbaren Teleskopförderers (4), umfassend:
- eine Endseite (6), die zur Aufnahme des Teleskopförderers (4) in ausgezogenem Zustand ausgestaltet ist;
- eine an den Werkstatttrailer (2) gekoppelte Stützvorrichtung (8), umfassend eine Trägervorrichtung (10) und mindestens eine an die Trägervorrichtung (10) koppelbare Hebevorrichtung (12), wobei die Stützvorrichtung (8) ausgestaltet ist, zumindest einen Teil des Teleskopförderers (4) abzustützen; und
- eine Vielzahl an Werkzeugen (20), welche mit dem Werkstatttrailer (2) gekoppelt und zur Wartung des Teleskopförderers (4) ausgestaltet sind;
**dadurch gekennzeichnet, dass**
die Trägervorrichtung (10) einen entlang einer Breite des Werkstatttrailers (2) angeordneten Querträger (14) umfasst, wobei die Hebevorrichtung (12) an den Querträger (14) koppelbar ist.

2. Werkstatttrailer (2) nach Anspruch 1, **dadurch gekennzeichnet, dass**
die Trägervorrichtung (10) zwei oder mehr Querträger (14) umfasst, die versetzt entlang einer Länge des Werkstatttrailers (2) angeordnet sind.

3. Werkstatttrailer (2) nach einem der vorangehenden Ansprüche, **dadurch gekennzeichnet, dass**
die Hebevorrichtung (12) so an die Querträger (14) koppelbar und einstellbar ist, dass sie entlang einer Länge der Querträger (14) beweglich und/oder arretierbar ist.

4. Werkstatttrailer (2) nach einem der vorangehenden Ansprüche, **dadurch gekennzeichnet, dass**
der Werkstatttrailer (2) zudem eine Förderbandgurt-Gurttrommel (30) umfasst, die an die Trägervorrichtung (10) koppelbar ist.

5. Werkstatttrailer (2) nach einem der vorangehenden Ansprüche, **dadurch gekennzeichnet, dass**
die Werkzeuge (20) ein Gurtschweißgerät (36) umfassen, welches ausgestaltet ist, Förderbandgurtenden eines ganz oder teilweise durchtrennten Förderbandgurtes des ausziehbaren Teleskopförderers (4) thermisch zu verbinden.

6. Werkstatttrailer (2) nach Anspruch 5, **dadurch gekennzeichnet, dass**
das Gurtschweißgerät (36) zudem eine Schneidevorrichtung umfasst, welche ausgestaltet ist, den Förderbandgurt zu durchtrennen.

7. Werkstatttrailer (2) nach einem der vorangehenden Ansprüche, zudem umfassend
einen Generator (32) und/oder eine Abtrennvorrichtung (34), die als sicherheitsrelevanter Zugangsschutz ausgestaltet ist, um die Endseite (6) des Werkstatttrailers (2) gelegt zu werden.

8. Werkstatttrailer (2) nach einem der vorangehenden Ansprüche, **dadurch gekennzeichnet, dass**
einige oder alle Werkzeuge (20) und/oder alle weiteren Vorrichtungen zur Wartung des ausziehbaren Teleskopförderers (4) vom Werkstatttrailer (2) entkoppelbar ausgestaltet sind.

9. Verfahren zur Wartung eines ausziehbaren Teleskopförderers (4) an einem Tor, umfassend die Verfahrensschritte:
a) Positionieren einer geöffneten Endseite (6) eines Werkstatttrailers (2) an das Tor angrenzend, wobei die geöffnete Endseite (6) zur Aufnahme des Teleskopförderers (4) ausgestaltet ist;
b) Ausziehen des Teleskopförderers (4) entlang einer Länge des Werkstatttrailers (2) über die geöffnete Endseite (6) in den Werkstatttrailer (2) hinein;
c) Abstützen von zumindest einem Teil des ausgezogenen Teleskopförderers (4) mit Hilfe einer an den Werkstatttrailer (2) gekoppelten Stützvorrichtung (8), umfassend eine Trägervorrichtung (10) und mindestens eine an die Trägervorrichtung (10) koppelbare Hebevorrichtung (12), so dass der Teleskopförderer (4) auf einer zweckmäßigen Arbeitshöhe für die Wartung positioniert ist;
d) Wartung des Teleskopförderers (4) unter Verwendung einer Vielzahl an Werkzeugen (20), welche mit dem Werkstatttrailer (2) gekoppelt und zur Wartung des Teleskopförderers (4) ausgestaltet sind;
**dadurch gekennzeichnet, dass**
die Trägervorrichtung (10) einen entlang einer Breite des Werkstatttrailers (2) angeordneten Querträger (14) umfasst, an die mindestens eine Hebevorrichtung (12) beweglich gekoppelt wird.

10. Verfahren nach Anspruch 9, **dadurch gekennzeichnet, dass**
die mindestens eine Hebevorrichtung (12) entlang dem Querträger (14) bewegt und/oder arretiert wird.

11. Verfahren nach einem der Ansprüche 9 bis 10, **dadurch gekennzeichnet, dass**
die Trägervorrichtung (10) zwei oder mehr Querträger (14) umfasst, die versetzt entlang einer Länge des Werkstatttrailers (2) angeordnet sind, wobei die Hebevorrichtung (12) wahlfrei an einen der zwei oder mehr Querträger (14) befestigt wird.

12. Verfahren nach einem der Ansprüche 9 bis 11, zudem umfassend den Verfahrensschritt
Förderbandgurtenden eines ganz oder zumindest teilweise durchtrennten Förderbandgurtes des Teleskopförderers (4) werden mit einem von dem Werkstatttrailer (2) umfassten Gurtschweißgerät (36) thermisch verbunden.

13. Verfahren nach Anspruch 12, zudem umfassend den Verfahrensschritt
der Förderbandgurt wird ganz oder vollständig von dem Gurtschweißgerät (36) durchtrennt.

14. Verfahren nach einem der Ansprüche 9 bis 13, zudem umfassend den Verfahrensschritt
der Werkstatttrailer (2) wird an seiner geöffneten Endseite (6) gegen unerwünschten Zugang abgeschirmt.

15. Verfahren nach einem der Ansprüche 9 bis 14, zudem umfassend den Verfahrensschritt
Entkoppeln einiger oder aller Werkzeuge (20) und/oder aller weiteren Vorrichtungen vom Werkstatttrailer (2) und Wartung des Teleskopförderers (4) mit diesen entkoppelten Werkzeugen (20) und/oder Vorrichtungen.
